# EUROPEAN PATENT SPECIFICATION

(11) **EP 0 465 053 B1**
(45) Date of publication and mention of the grant of the patent: **28.08.2002**
(21) Application number: 91305585.1
(22) Date of filing: 20.06.1991
(51) Int. Cl.: G11B 20/10, G11B 27/00

(54) **Disc recording/reproducing apparatus**
Plattenauszeichnungs-/Wiedergabegerät
Appareil d'enregistrement/de reproduction à disque

(30) Priority: 29.06.1990 JP 16997790
(43) Date of publication of application: 08.01.1992
(60) Divisional application: 01202301.6
(73) Proprietor: SONY CORPORATION, Tokyo 141 (JP)
(72) Inventor: Maeda, Yasuaki, c/o Patents Division, Shinagawa-ku, Tokyo 141 (JP); Arataki, Yuji, c/o Patents Division, Shinagawa-ku, Tokyo 141 (JP); Yoshida, Tadao, c/o Patents Division, Shinagawa-ku, Tokyo 141 (JP)
(74) Representative: Cotter, Ivan John

(56) References cited:
- EP-A- 0 155 970
- EP-A- 0 196 590
- EP-A- 0 249 781
- EP-A- 0 283 727
- EP-A- 0 429 139
- FR-A- 2 317 726
- GB-A- 2 136 192
- US-A- 4 796 247

## Description

This invention relates to disc recording apparatus, to disc reproducing apparatus, and to disc recording and reproducing apparatus.

In a disc apparatus, such as a compact disc (CD) player which plays back a CD having concentric tracks in which digital audio data are recorded as a pit train, the disc is irradiated with a laser beam along the tracks therein while the disc is driven to rotate at a constant linear velocity by a spindle motor. The digital audio data are reproduced by detecting changes in the strength of the reflected light due to the presence or absence of the pits.

The error rate on reproduction of the data may be, for example, about 10⁻⁵, and the reproduced data are subjected to error correction processing using error detection codes and error correction codes, so that no reproduction problem will occur in a normal environment.

In a CD player, which includes an optical reproducing head, and a servo system, such as a focus servo or a tracking servo for the reproducing head, deviation of the reproducing head due to mechanical disturbances such as vibration or shock can cause normal data reproduction to become difficult. In such a case, an error may not be corrected, even if the above mentioned error detection codes or error correction codes are used, so that reproduction may be temporarily interrupted.

In CD players for vehicles or portable CD players, which have a high possibility of experiencing substantial vibration or shock, unlike a static home use CD player, a mechanical anti-vibration mechanism has been provided to prevent the servo system from deviating due to such disturbances.

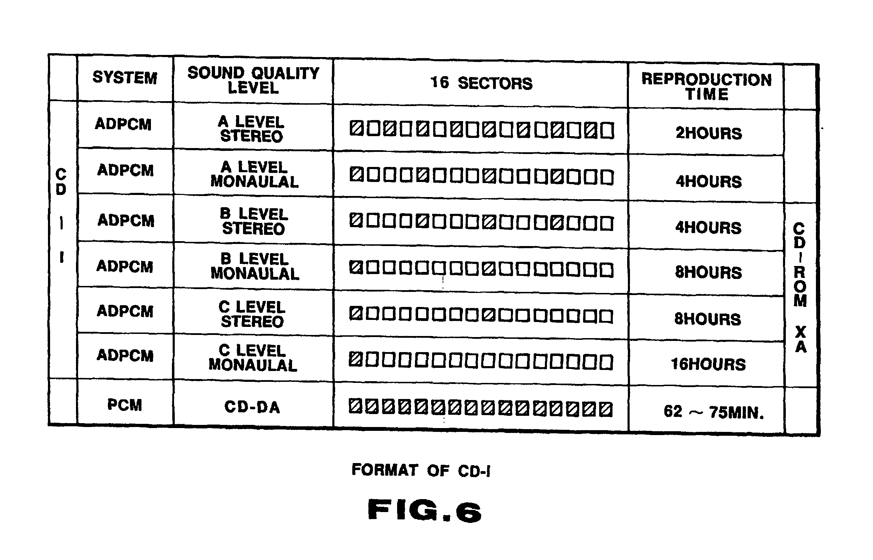

In a so-called CD-I (CD-interactive) system for simultaneously recording video data, character data, and audio information in a compact disc, six modes have theretofore been standardized in addition to a CD digital audio (CD-DA) mode. This is shown in Figure 6.

Linear pulse code modulation (PCM) having a sampling frequency of 44.1 kHz and a quantization number of sixteen bits is used in the CD-DA mode, having a level of sound quality equivalent to existing 16-bit PCM. Adaptive differential PCM (ADPCM) having a sampling frequency of 37.8 kHz and a quantization number of eight bits is used in the A level stereo mode and A level monaural mode, having a sound quality equivalent to an LP disc record.

ADPCM having a sampling frequency of 37.8 kHz and a quantization number of four bits is used in the B level stereo mode and the B level monaural mode, having a sound quality equivalent to FM broadcasting. ADPCM having a sampling frequency of 18.9 kHz and a quantization number of four bits is used in the C level stereo mode and C level monaural mode, having a sound quality equivalent to AM broadcasting.

In other words, as shown in Figure 6, the bit saving factor is 1/2 in the A level stereo mode in comparison with the CD-DA mode. Data are recorded at intervals of two sectors. The black squares in the drawing represent recorded sectors. The reproduction or playback period for one disc is about two hours. The bit saving factor is 1/4 in the A level monaural mode. Data are recorded at intervals of four sectors. The reproduction period is about four hours. The bit saving factor is 1/8 in the B level monaural mode. Data are recorded at intervals of eight sectors. The reproduction period is about eight hours. The bit saving factor is 1/8 in the C level stereo mode. Data are recorded at intervals of eight sectors. The reproduction period is about eight hours. The bit saving factor is 1/16 in the C level monaural mode. Data are recorded at intervals of sixteen sectors. The reproduction period is about 16 hours.

For example, in the B level stereo mode, the audio information is discretely recorded in sector units at intervals of four sectors along the tracks from the first sector on the innermost track.

After the audio information has been recorded on the outermost tracks, the audio information is recorded along tracks at intervals of four sectors from the second sector on the innermost to the outermost tracks. When the audio information which has been recorded in such a manner is reproduced, the data are not continuously reproduced, so that playback music, for example, is interrupted while the playback head jumps to return from the outermost track to the innermost track.

A disc recording apparatus which records digital data which meet the standards of the above mentioned CD or CD-I on an optical disc, of a type which will be described hereafter, or an information rewritable magneto-optical disc has heretofore been provided. Also in this disc recording apparatus, the servo system of a focus servo or tracking servo for a recording head will deviate due to mechanical disturbances such as vibration or shock, so that recording may be temporarily interrupted.

EP-A-0 429 139 (published after the priority date of the present case and relevant for novelty purposes only in DE, FR, GB and IT under Article 54(3) EPC) discloses an optical disk recording/reproducing apparatus which buffers data to allow for sector seek times.

EP-A-0 283 727 discloses an audio data copying system in which audio data from an optical disk is buffered before being recorded onto a magnetic tape.

GB-A-2,136,192 discloses an optical disc reproducing apparatus in which data is reproduced at a high rate from the optical disc and stored in a buffer memory from where it is read out at a low rate to reproduce an audio signal. Data is written into the buffer memory whenever there is an empty memory block and the next section of data on the optical disc not already written to the buffer memory is reproduced as the optical disc rotates.

According to the present invention there is provided a disc recording apparatus for recording inputted data on tracks on a disc recording medium, the apparatus comprising:
memory means into which successively inputted data are sequentially written at a first transfer rate and from which the inputted data are read out at a second, higher transfer rate;
recording means for recording on the disc recording medium the data read from the memory means; and
control means for controlling the reading of the memory means so that a first amount of data is successively read from the memory means when the amount of the inputted data stored in the memory means exceeds the first amount, in order always to ensure a write area for writing the data in the memory means, the write area having a capacity higher than a predetermined second amount of the inputted data;
the control means being connected to the recording means to control the recording position on the disc recording medium so that the first amount of data which is sequentially read from the memory means is successively recorded on the recording tracks of the recording medium; and
wherein the first amount of data is not less than a minimum recording unit of the recording data; characterised in that
the control means stops reading the data from the memory means when the recording means becomes incapable of recording due to a physical disturbance of the recording medium and thereafter resumes reading the data from the memory means after the recording means is again capable of recording.

The invention will now be described by way of example with reference to the accompanying drawings, throughout which like parts are referred to by like references, and in which:
Figure 1 is a block diagram of an embodiment of disc recording/reproducing apparatus according to the present invention;
Figure 2 is a block diagram of a display unit of the embodiment of Figure 1;
Figure 3 is a diagram showing a data format used in the embodiment of Figure 1;
Figures 4(a) to 4(f) are schematic views showing the sequential states of a memory in recording;
Figures 5(a) to 5(f) are schematic views showing the sequential states of the memory in reproducing;
Figure 6 is a diagram showing a data format of a CD-I.

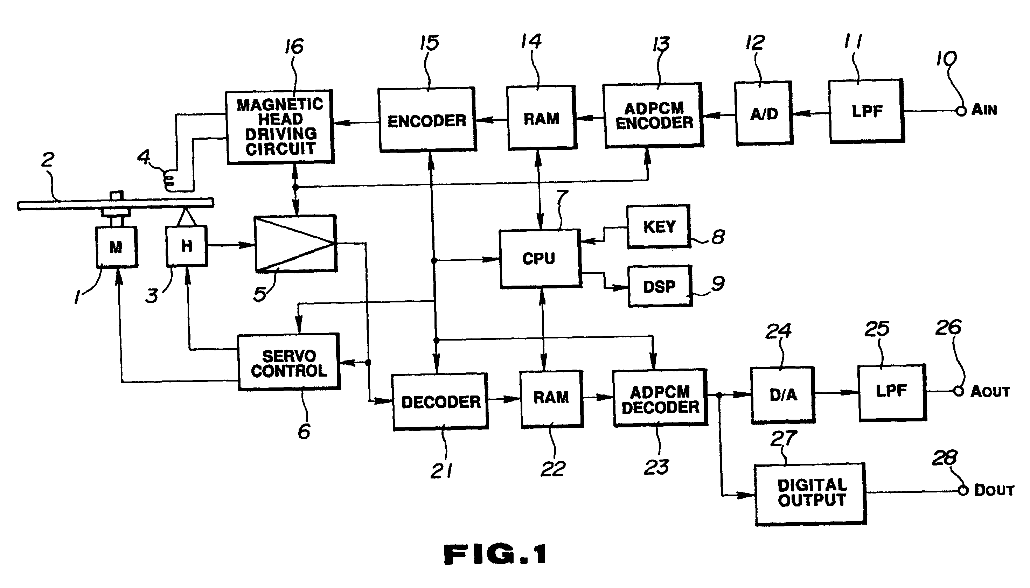

Referring now to Figure 1, a disc recording/reproducing apparatus includes a magneto-optical disc 2 serving as a recording medium which is driven to rotate at a given speed by a spindle motor 1. Recording of data along recording tracks (not shown) of the disc 2 is achieved by applying a magnetic field modulated in accordance with recording data by a magnetic head 4 while the disc 2 is irradiated with a laser light from an optical head 3. Reproduction of the recorded data is achieved by tracing the recording tracks on the disc 2 with a laser light from the optical head 3.

Although not shown in the figures, it will be understood that the optical head 3 comprises a laser light source such as a laser diode, optical components such as a collimator lens, an objective lens, a polarized light beam splitter, a cylindrical lens and a photodetector which are arranged in given positions. The optical head 3 is opposite to the magnetic head 4, so that the disc 2 is located between the heads 3 and 4. The optical head 3 directs a laser light beam upon a target track on the disc 2 to which is applied a magnetic field modulated in accordance with recording data. By driving the magnetic head 4 with a head driving circuit 16 of a recording system, which will be described hereafter, the data are recorded on the disc 2 by thermomagnetic recording.

The optical head 3 also detects the laser light reflected from the irradiated target track for detecting a focus error by, for example, a so-called astigmatism method, or for detecting a tracking error by, for example, a so-called push-pull method, and generates a reproduced signal by detecting the difference in the polarization angle (Kerr rotational angle) of the laser light reflected from the target track when data are reproduced from the disc 2.

The output of the optical head 3 is supplied to an RF circuit 5. The RF circuit 5 extracts a focus error signal or a tracking error signal from the output of the optical head 3 for supply to a servo control circuit 6, and codes the reproduced signals to binary signals for supplying the binary coded signals to a decoder 21 of the reproducing system which will be described below.

Although not shown in the figures, the servo control circuit 6 comprises, for example, a focus servo control circuit, a tracking servo control circuit, a spindle motor servo control circuit and a sled servo control circuit. The focus servo control circuit performs a focus control of the optical system (not shown) of the optical head 3 so that the focus error signal becomes zero. The tracking servo control circuit performs a tracking control of the optical system of the optical head 3 so that the tracking error signal becomes zero. The spindle motor servo control circuit controls the motor 1 so that the disc 2 is driven to rotate at a given rotational speed. The sled servo control circuit moves the optical head 3 and the magnetic head 4 to the target track position of the disc 2 specified by a system controller (CPU) 7. The servo control circuit 6 which performs these various controls supplies the system controller 7 with information representative of the operational conditions of the various units controlled by the servo control circuit 6.

The system controller 7 is connected to a key input unit 8 and a display unit 9. The system controller 7 controls the recording system and the reproducing system in an operation or mode (compression mode) specified by input information from the key input unit 8. The system controller 7 controls the recording position and the reproducing position on the recording track traced by the optical head 3 and the magnetic head 4, respectively based upon address information of a sector unit reproduced from the recording track of the disc 2 by a header time and sub-Q data. The system controller 7 supplies the display unit 9 with absolute time data D_{TM} corresponding to the recording position and the reproducing position, compression ratio data D_{COMP} depending upon the operational modes of the recording system and the reproducing system, and offset data D_{OFFSET} for display, so that the recording time and the reproducing time are displayed by the display unit 9.

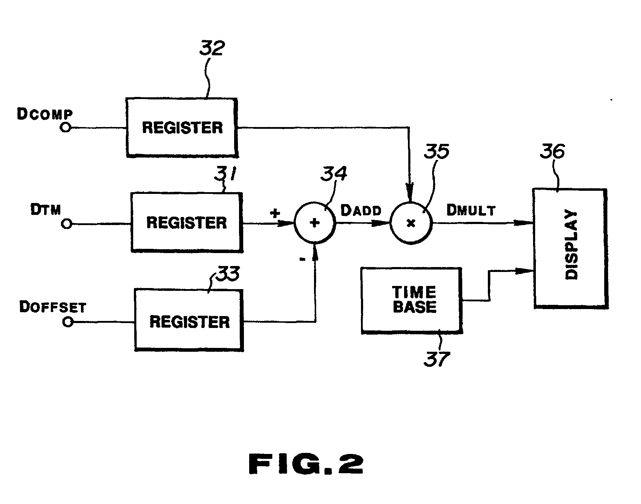

Referring now more particularly to Figure 2, the display unit 9 comprises a subtracter 34 which is supplied with absolute time data D_{TM}, via a first register 31, and offset data D_{OFFSET}, via a second register 33. Also included is a multiplier 35 which is supplied with the compression ratio data D_{COMP} from the system controller 7, via a third register 32, and is supplied with subtraction output data D_{ADD} from the subtracter 34. A display 36 is supplied with multiplication output data D_{MULT} from the multiplier 35.

The subtracter 34 subtracts the offset data D_{OFFSET}, which are temporarily stored in the second register 33, from the absolute time data D_{TM} which are temporarily stored in the first register 31. That is, the subtracter 34 subtracts the offset data D_{OFFSET} from the absolute time data D_{TM}, which are representative of the current recording position and the reproducing position in the recording system and the reproducing system, respectively, in accordance with the address information of the sector unit for forming the subtraction output data D_{ADD} (= D_{TM} - D_{OFFSET}). D_{ADD} are representative of the elapsed absolute time of only the data of the programme which is currently being recorded or reproduced, and is supplied to the multiplier 35.

The multiplier 35 multiplies the compression ratio data D_{COMP}, which are temporarily stored in the third register 32, with the subtraction output data D_{ADD} from the subtracter 34. The multiplier 35 thus forms multiplication output data D_{MULT}, which are representative of an actual elapsed time of the current recording or reproducing programme data, and supplies the display 36 with the multiplication output data D_{MULT}.

The display 36 then displays the actual elapsed period of time of only the data of the programme which are currently recorded or reproduced based on the multiplication output data D_{MULT}. Although the actual time of only the programme data is displayed in this embodiment, the total period of time until the present time may be displayed by selecting the value of D_{OFFSET}. The D_{OFFSET} information is prepared based upon table of contents (TOC) data which has been preliminarily recorded in the disc. The display 36 is also connected with a time base 37 which interpolation-displays a display time if the compression ratio of the recording system or the reproducing system is high, or a time display with a small unit is necessary.

The reproducing system of the disc recording/reproducing apparatus comprises an A/D converter 12 to which an analogue audio signal A_{IN} is supplied via a low-pass filter 11 from an input terminal 10. The A/D converter 12 quantizes the audio signal A_{IN} to form digital audio data of a given transfer rate (75 sectors/second) corresponding to the CD-DA mode in the above-mentioned CD-I system. The digital audio data obtained by the A/D converter 12 are supplied to an ADPCM encoder 13.

The ADPCM encoder 13 performs, in accordance with the various modes in the above-mentioned CD-I system, data compression processing of the digital audio data of a given transfer rate which have been obtained by quantizing the audio signal A_{IN} in the A/D converter 12. The operation mode is specified by the system controller 7. In this embodiment, it is assumed that the digital audio data of the CD-DA mode are converted into the ADPCM audio time axis of the B level stereo mode having a transfer rate of 18.75 (75/4) sectors/second by performing a data compression to 1/4 by the ADPCM encoder 13. The ADPCM audio data of the B level stereo mode which are successively outputted at a transfer rate of 18.75 sectors/second from the ADPCM encoder 13 are supplied to a memory 14.

Writing or reading of the data to and from the memory 14 is controlled by the system controller 7. The ADPCM audio data of the B level stereo mode which are supplied from the ADPCM encoder 13 are sequentially written into the memory 14 at a transfer rate of 18.75 sectors/second and are thereafter read out in a burst from the memory 14 at a transfer rate of 75 sectors/second as recording data.

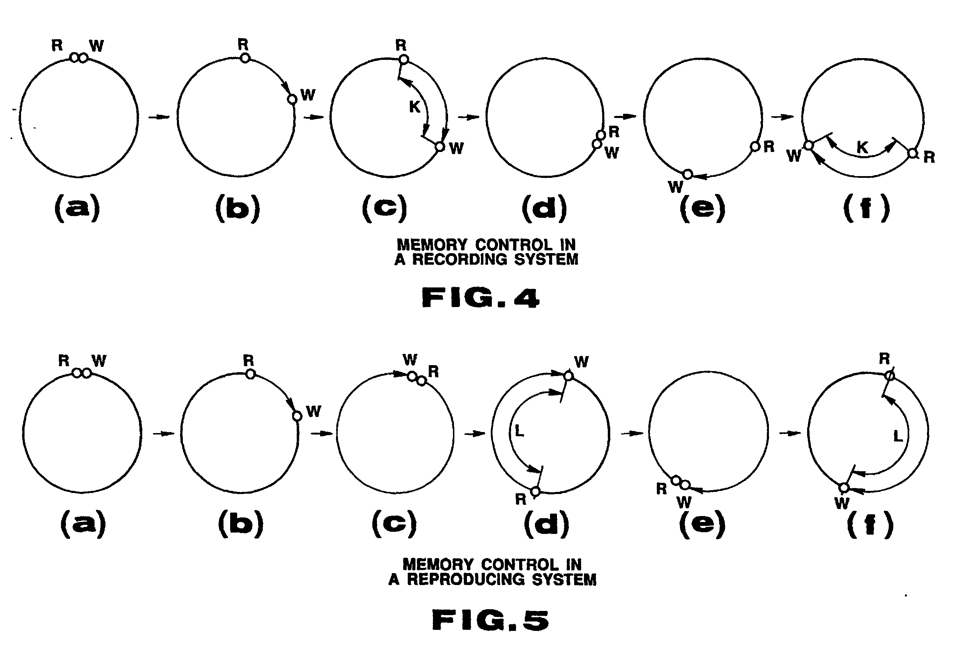

The system controller 7 successively writes the ADPCM audio data into the memory 14 at a transfer rate of 18.75 sectors/second by successively incrementing the write pointer W of the memory 14 at a transfer rate of 18.75 sectors/second as shown in Figures 4(a) to 4(b). Next, as shown in Figures 4(c) to 4(d) and again in Figures 4(e) to 4(f), the system controller 7 reads out from the memory 14 an amount K of the stored data in a burst, that is at a transfer rate of 75 sectors/second, as the recording data, by incrementing the read pointer R of the memory 14 at a transfer rate of 75 sectors/second when the amount of the ADPCM audio data stored in the memory 14 exceeds the given value K. The ADPCM audio data, that is, the recording data which have been read in a burst at a transfer rate of 75 sectors/second from the memory 14 are supplied to the encoder 15.

The encoder 15 performs a coding processing or an EFM coding processing of the recording data supplied in a burst from the memory 14 for correcting the error. The recording data which have been subjected to coding processing by the encoder 15 are supplied to the magnetic head driving circuit 16.

The head driving circuit 16 is connected to the magnetic head 4 for driving it so that a magnetic field which is modulated in accordance with the recording data is applied to the disc 2.

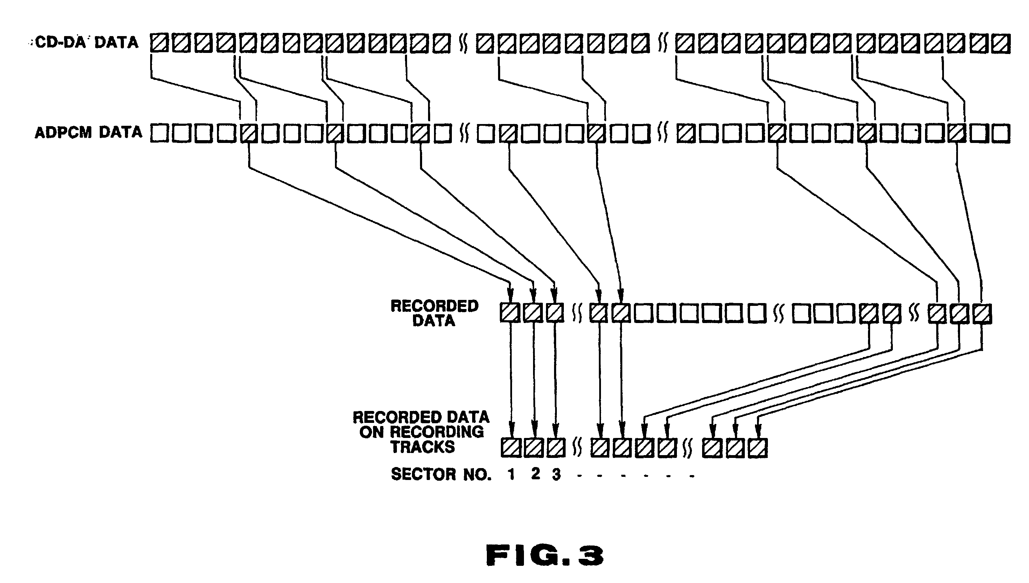

The system controller 7 performs the above mentioned control of the memory 14 and the control of the recording position on the recording tracks so that the recording data which are read in a burst from the memory 14 by this memory control are successively recorded on the recording tracks of the disc 2 as shown in Figure 3.

The system controller 7 is monitoring the last position of the recorded data on the recording tracks of the disc 2, and supplying the servo control circuit 6 with a control signal for specifying the recording position according to the last position of the recorded data.

In the recording system of the disc recording/reproducing apparatus, the ADPCM audio data sequentially outputted at a transfer rate of 18.75 sectors/second from the ADPCM encoder 13 are written into the memory 14 at a transfer rate of 18.75 sectors/second by the above mentioned memory control of the system controller 7. When the amount of ADPCM audio data stored in the memory 14 exceeds a given amount K, the ADPCM audio data are read in a burst at a transfer rate of 75 sectors/second as recorded data from the memory 14. Preferably the given amount of data is not less than a minimum recording unit of the recording data. Therefore, input data can be successively written into the memory 14 while always ensuring a data write area having a capacity of more than a given amount in the memory 14.

The recorded data which are read out from the memory in a burst can be recorded on the recording tracks of the disc 2 in a successive manner by controlling the recording position on the recording track of the disc 2 by the system controller 7. As mentioned above, the data write area having a capacity of more than a given amount is always assumed in the memory 14. Accordingly, if the operation of recording on the disc 2 is interrupted by the occurrence of a track jump or other incident due to a disturbance which is detected by the system controller 7, a recovery operation can be carried out while inputted data continue to be written into the date write area having a capacity of more than a given amount, and the inputted data can be recorded on the recording track of the disc 2 in a successive manner.

Header time data (absolute time information) corresponding to the physical address of the sector are added to the ADPCM audio data for each sector and recorded in disc 2. Table-of-contents (TOC) data representative of the recording area and the recording mode are recorded in a table-of-contents (TOC) area preset on the disc 2 at a predetermined position.

The reproducing system of the disc recording/reproducing apparatus will now be described. The reproducing system reproduces the data which have been successively recorded in the recording track of the disc 2 by the recording system as mentioned above. The reproducing system comprises the decoder 21 which is supplied with reproduced outputs which are obtained by tracing the recording track of the disc 2 with a laser light generated by the optical head 3, and are binary coded by the RF circuit 5.

The decoder 21 corresponds to the encoder 15, and performs processing such as error correction decoding processing and EFM decoding processing of the reproduced outputs which are binary coded by the RF circuit 5. The output of the decoder 21 is the ADPCM audio data of the above mentioned eight level stereo mode at a transfer rate of 75 sectors/second which is higher than a normal transfer rate in the B level stereo mode. The reproduced data obtained by the decoder 21 are supplied to the memory 22.

Writing and reading of data to and from the memory 22 are controlled by the system controller 7, so that the reproduced data supplied at a transfer rate of 75 sectors/second from the decoder 21 are written to the memory 22 in a burst at a transfer rate of 75 sectors/second, and are sequentially read out from the memory 22 at a normal transfer rate of 18.75 sectors/second of the B level stereo mode.

The system controller 7 writes the reproduced data into the memory 22 at a transfer rate of 75 sectors/second by incrementing a write pointer W of the memory 22 and successively reads the reproduced data at a transfer rate of 18.75 sectors/second from the memory 22 by successively incrementing a read pointer R of the memory 22 at a transfer rate of 18.75 sectors/second. As best shown in Figures 5(a) to 5(b), the system controller 7 performs the memory control by incrementing the write pointer W of the memory 22 in a burst at a transfer rate of 75 sectors/second to stop writing when the write pointer W catches up with the read pointer R (Figure 5(c)) and to start writing when the amount of the reproduced data stored in the memory 22 exceeds a given amount L (Figures 5(d) to 5(e)). Preferably, the given amount of data is not less than a minimum recording unit of the recording data.

The system controller 7 not only controls the memory 22, as described above, but also controls the reproducing position so that the reproduced data which are successively written into the memory 22 in a burst by this memory control are successively reproduced from the recording track of the disc 2.

The system controller 7 is monitoring the last position of the reproduced data on the recording tracks of the disc 2, and supplying the servo control circuit 6 with a control signal for specifying the reproducing position according to the last position of the reproduced data.

The ADPCM audio data of the B level stereo mode which are obtained as reproduced data successively read out from the memory 22 at a transfer rate of 18.75 sectors/second are supplied to an ADPCM decoder 23.

The ADPCM decoder 23 corresponds to the ADPCM encoder of the recording system. The operation mode of the ADPCM decoder 23 is specified by the system controller 7. In this embodiment, the ADPCM decoder 23 reproduces the digital audio data by extending the ADPCM audio data of the B level stereo mode to four times. The digital audio data are supplied to a D/A converter 24 from the ADPCM decoder 23.

The D/A converter 24 converts the digital audio data supplied from the ADPCM decoder 23 into analogue audio signals A_{OUT}, and outputs them from an output terminal 26 via a low-pass filter 25. Digital audio signals D_{OUT} from the ADPCM decoder 23 are output at a digital output terminal 28 via a digital output encoder 27.

In the reproducing system of the disc recording/reproducing apparatus, the ADPCM audio data of the B level stereo mode reproduced from the recording track of the disc 2 are written in a burst into the memory 22 at a transfer rate of 75 sectors/second, and the ADPCM audio data are successively read out from the memory 22 as reproduced data at a transfer rate of 18.75 sectors/second under memory control by the system controller 7. Accordingly, the reproduced data can be successively read out from the memory 22, while always ensuring a data read area having a capacity of more than an amount L in the memory 22.

The reproduced data which are read out in a burst from the memory 22 can be reproduced from the recording track of the disc 2 in a successive manner by controlling the reproducing position on the recording track of the disc 2 by the system controller 7. Since a data read area having a capacity of more than an amount L is always ensured in the memory 22 as mentioned above, the analogue audio signal continues to be outputted by reading reproduced data from the data read out area having a capacity of more than L and the recover processing operation can be performed during that time even if the reproducing operation of the disc 2 is interrupted by the occurrence of a track jump due to a disturbance which is detected by the system controller 7.

The display unit 9 of the disc recording/reproducing apparatus forms an addition output data D_{ADD} (= D_{TM} - D_{OFFSET}). D_{ADD} is representative of the elapsed absolute period of time of only the data of a currently recorded or reproduced programme and is formed by subtracting the offset data D_{OFFSET} from the absolute time data D_{TM} representative of the current recording position or reproducing system, respectively, depending upon the address information in the sector unit supplied from the system controller 7 as mentioned above. The display unit 9 forms multiplication output data D_{MULT} which are representative of the actual elapsed period of time of the currently recorded or reproduced programme data by multiplying the addition output data D_{ADD} with the compression ratio data D_{COMP}, that is, by the factor four in the B level stereo mode. Thus, the actual elapsed period of time of only the currently recorded or reproduced programme data can be displayed based upon the multiplication output data D_{MULT}.

Although the embodiment of the disc recording/reproducing apparatus has been described with reference to recording and reproducing of the ADPCM audio data in the B level stereo mode, recording and reproducing of the ADPCM audio data of the other modes in the other CD-I system can be performed. It will suffice to perform a time-axis compression processing of the PCM audio data of the CD-DA mode in the memory 22 for recording the recorded data while driving the disc 2 to rotate at a speed depending upon the compression ratio of the time axis compression processing in the recording system, and to perform a time axis extension processing in the memory 22 in the reproducing system.

In the above embodiment, input data to be successively inputted are sequentially written into memory means. When the amount of the input data stored in the memory means exceeds a given amount, the stored input data are sequentially read out of the memory means, as recording data, in a burst at a transfer rate which is higher than the transfer rate of the input data. Accordingly, the input data can be successively written into the memory means while always ensuring the presence of a data write area having a capacity of more than a given amount in the memory means. The recording data which are read out from the memory means in a burst are recorded on the recording tracks in a successive manner by controlling the recording position on the recording tracks on the disc recording medium.

A data write area having a capacity of more than a given value is always ensured in the memory means as mentioned above. Therefore, the input data can continue to be written into the memory means even if the recording operation on the disc recording medium is interrupted by a track jump or other incident occurs due to disturbances and the recovery operation can be performed during this interruption. The input data can thus be recorded on the recording tracks of the disc recording medium in a successive manner. Therefore, the embodiment provides a disc recording apparatus which is capable of successively recording data on the recording tracks of the disc recording medium irrespective of disturbance of the servo system due to a disturbance.

In the disc reproducing apparatus, the data recorded on the disc recording medium, which is driven to rotate at a given speed, are sequentially reproduced at a transfer rate which is higher than a given transfer rate at which the reproduced data are to be output. The recorded data are reproduced by reproducing means and are sequentially written in the memory means at the high transfer rate and are thereafter successively read out from the memory means as reproduced output data at the lower, given transfer rate. Accordingly, the reproduced output data can be successively read out from the memory means while always ensuring the presence of a data read area, having a capacity which is higher than a given value, in the memory means.

The reproduced data which have been written into the memory means in a burst are reproduced from the recording tracks in a successive manner by controlling the reproduction position on the recording tracks of the disc recording medium. Since a data read area having a capacity of more than the given value is always ensured in the memory means as mentioned above, the reproduction data can continue to be read out from the memory means even if reproduction operation of the disc recording medium is interrupted when a track jump or other incident occurs due to a disturbance. A recover operation can be performed during this interruption and the reproduced audio signals can be successively outputted.

Therefore, the embodiment can provide a disc reproduction apparatus which is capable of successively reproducing data from the recording tracks on the disc recording medium irrespective of disturbance of the servo system.

## Claims

1. A disc recording apparatus for recording inputted data on tracks on a disc recording medium, the apparatus comprising:
memory means (14) into which successively inputted data are sequentially written at a first transfer rate and from which the inputted data are read out at a second, higher transfer rate;
recording means (3, 4) for recording on the disc recording medium (2) the data read from the memory means (14); and
control means for controlling the reading of the memory means (14) so that a first amount of data is successively read from the memory means (14) when the amount of the inputted data stored in the memory means (14) exceeds the first amount, in order always to ensure a write area for writing the data in the memory means (14), the write area having a capacity higher than a predetermined second amount of the inputted data;
the control means (7) being connected to the recording means (3, 4) to control the recording position on the disc recording medium (2) so that the first amount of data which is sequentially read from the memory means (14) is successively recorded on the recording tracks of the recording medium (2).

2. Apparatus according to claim 1 wherein the first amount of data is not less than a minimum recording unit of the recording data.

3. Apparatus according to claim 2 wherein the control means (7) stops reading the data from the memory means (14) when the recording means (3, 4) becomes incapable of recording, due for example to a physical disturbance of the recording medium (2), and thereafter resumes reading the data from the memory means (14) after the recording means (3, 4) is again capable of recording.

4. Apparatus according to claim 3 wherein a key input (8) for presetting the time-axis compression ratio of the input data is provided.

5. Apparatus according to claim 3 further comprising an ADPCM encoder (13), and wherein the input data are written into the memory means (14) via the ADPCM encoder (13).

6. Apparatus according to any one of the preceding claims wherein the disc recording medium (2) is a magneto-optical recording medium (2).

7. Apparatus according to claim 1 wherein absolute time information corresponding to the recording position on the disc recording medium (2) together with the recording data are recorded on the disc recording medium (2).

8. Apparatus according to claim 1 comprising a disc reproducing apparatus for reproducing data successively recorded on tracks on a disc recording medium (2), the reproducing apparatus comprising:
reproducing means (3, 4) for successively reproducing the recorded data at a second transfer rate which is higher than a first transfer rate required for outputting the reproduced data;
memory means (22) into which the reproduced data read out by the reproducing means (3, 4) are sequentially written at the second transfer rate and from which the thus written data are successively read out as reproduced output data at the first transfer rate; and
control means (7) for controlling the writing of the reproduced data in the memory means (22) so that a second amount of the reproduced data is written into the memory means (22) and an amount of reproduced data, not less than a first amount, are always stored in the memory means (22) when the amount of the reproduced data stored in the memory means (22) becomes not higher than the first amount;
the control means (7) also causing the reproducing means (3, 4) to control the reproduction position on the disc recording medium (2) so that the reproduced data sequentially written into the memory means (22) in an interrupted manner are successively read from the recording tracks on the disc recording medium (2).

## Patentansprüche

1. Plattenaufzeichnungsgerät zur Aufzeichnung von auf Spuren auf einem Plattenaufzeichnungsmedium eingegebenen Daten, wobei das Gerät aufweist:
Eine Speichereinrichtung (14) in die sukzessiv eingegebene Daten sequentiell mit einer ersten Übertragungsrate geschrieben und von der die eingegebenen Daten mit einer höheren zweiten Übertragungsrate ausgelesen werden,
einer Aufzeichnungseinrichtung (3, 4) zur Aufzeichnung der von der Speichereinrichtung (14) gelesenen Daten auf dem Plattenaufzeichnungsmedium (2), und
einer Steuerungseinrichtung zur Steuerung des Lesens der Speichereinrichtung (14) so, dass aus der Speichereinrichtung (14) sukzessive eine erste Datenmenge gelesen wird, wenn die Menge der in der Speichereinrichtung (14) gespeicherten eingegebenen Daten die ersten Menge übersteigt, um immer einen Schreibbereich zum Schreiben der Daten in die Speichereinrichtung (14) sicherzustellen, wobei der Schreibbereich eine Kapazität aufweist, die höher als eine vorbestimmte zweite Menge der eingegebenen Daten ist, wobei
die Steuerungseinrichtung (7) mit der Aufzeichnungseinrichtung (3, 4) verbunden ist, um die Aufzeichnungsposition auf dem Plattenaufzeichnungsmedium (2) so zu steuern, dass die erste Datenmenge, die sequentiell aus der Speichereinrichtung (14) gelesen wird, sukzessive auf den Aufzeichnungsspuren des Aufzeichnungsmediums (2) aufgezeichnet wird.

2. Gerät nach Anspruch 1, wobei die erste Datenmenge nicht kleiner als eine minimale Aufzeichnungseinheit der Aufzeichnungsdaten ist.

3. Gerät nach Anspruch 2, wobei die Steuerungseinrichtung (7) das Lesen der Daten aus der Speichereinrichtung (14) stoppt, wenn die Aufzeichnungseinrichtung (3, 4) aufgrund beispielsweise einer physikalischen Störung des Aufzeichnungsmediums (2) aufzeichnungsunfähig wird, und danach das Lesen der Daten aus der Speichereinrichtung (14) wiederaufnimmt, nachdem die Aufzeichnungseinrichtung (3, 4) wieder aufzeichnungsfähig ist.

4. Gerät nach Anspruch 3, wobei eine Tasteneingabe (8) zum Voreinstellen des Zeitachsenkompressionsverhältnisses der Eingabedaten vorgesehen ist.

5. Gerät nach Anspruch 3, mit einem ADPCM-Codierer (13), wobei die Eingabedaten über den ADPCM-Codierer (13) in die Speichereinrichtung (14) geschrieben werden.

6. Gerät nach einem der vorhergehenden Ansprüche, wobei das Plattenaufzeichnungsmedium (2) ein magnetooptisches Aufzeichnungsmedium (2) ist.

7. Gerät nach Anspruch 1, wobei mit der Aufzeichnungsposition auf dem Plattenaufzeichnungsmedium (2) korrespondierende absolute Zeitinformation zusammen mit den Aufzeichnungsdaten auf dem Plattenaufzeichnungsmedium (2) aufgezeichnet sind.

8. Gerät nach Anspruch 1, mit einem Plattenwiedergabegerät zur Wiedergabe von auf Spuren eines Plattenaufzeichnungsgeräts (2) sukzessive aufgezeichneten Daten, wobei das Wiedergabegerät aufweist:
eine Wiedergabeeinrichtung (3, 4) zur sukzessiven Wiedergabe der aufgezeichneten Daten mit einer zweiten Übertragungsrate, die höher als eine zur Ausgabe der wiedergegebenen Daten erforderliche erste Übertragungsrate ist,
eine Speichereinrichtung (22), in welche die von der Wiedergabeeinrichtung (3, 4) ausgelesenen wiedergegebenen Daten sequentiell mit der zweiten Übertragungsrate geschrieben werden und von welcher die auf diese Weise geschriebenen Daten sukzessive mit der ersten Übertragungsrate als wiedergegebene Ausgabedaten ausgelesen werden, und einer Steuerungseinrichtung (7) zur Steuerung des Schreibens der wiedergegebenen Daten in die Speichereinrichtung (22), so dass eine zweite Menge der wiedergegebenen Daten in die Speichereinrichtung (22) geschrieben und eine Menge der wiedergegebenen Daten, die nicht kleiner als eine erste Menge sind, immer in der Speichereinrichtung (22) gespeichert sind, wenn die Menge der in der Speichereinrichtung gespeicherten wiedergegebenen Daten nicht höher als die erste Menge wird, wobei
die Steuerungseinrichtung (7) auch die Wiedergabeeinrichtung (3, 4) veranlasst, die Wiedergabeposition auf dem Plattenaufzeichnungsmedium (2) so zu steuern, dass die sequentiell in die Speichereinrichtung (22) geschriebenen wiedergegebenen Daten auf unterbrochene Art und Weise sukzessive von den Aufzeichnungsspuren auf dem Plattenaufzeichnungsmedium (2) gelesen werden.

## Revendications

1. Appareil d'enregistrement à disque pour enregistrer des données introduites sur des pistes sur un support d'enregistrement de disque, l'appareil comprenant :
un moyen de mémoire (14) dans lequel des données introduites successivement sont séquentiellement écrites à un premier débit de transfert et à partir duquel les données introduites sont extraites à un second débit de transfert supérieur ;
un moyen d'enregistrement (3, 4) pour enregistrer sur le support d'enregistrement de disque (2) les données lues à partir du moyen de mémoire (14) ; et
un moyen de commande pour commander la lecture du moyen de mémoire (14) pour qu'une première quantité de données soit successivement lue à partir du moyen de mémoire (14) lorsque la quantité de données introduites stockées dans le moyen de mémoire (14) dépasse la première quantité, afin de toujours assurer une zone d'écriture pour l'écriture des données dans le moyen de mémoire (14), la zone d'écriture ayant une capacité supérieure à une seconde quantité prédéterminée de données introduites ;
le moyen de commande (7) étant raccordé au moyen d'enregistrement (3, 4) pour commander la position d'enregistrement sur le support d'enregistrement de disque (2) pour que la première quantité de données qui soit séquentiellement lue à partir du moyen de mémoire (14) est successivement enregistrée sur les pistes d'enregistrement du support d'enregistrement (2).

2. Appareil selon la revendication 1 dans lequel la première quantité de données n'est pas inférieure à une unité d'enregistrement minimum des données d'enregistrement.

3. Appareil selon la revendication 2 dans lequel le moyen de commande (7) arrête la lecture des données à partir du moyen de mémoire (14) lorsque le moyen d'enregistrement (3, 4) devient incapable d'enregistrer, en raison par exemple d'une perturbation physique du support d'enregistrement (2), et ensuite reprend la lecture des données à partir du moyen de mémoire (14) après que le moyen de mémoire (3, 4) soit capable d'enregistrer.

4. Appareil d'enregistrement selon la revendication 3 dans lequel une entrée de clé (8) pour prérégler le rapport de compression de l'axe temporel des données d'entrée est fournie.

5. Appareil selon la revendication 3 comprenant en outre un codeur ADPCM (13), et dans lequel les données d'entrée sont écrites dans le moyen de mémoire (14) via le codeur ADPCM (13).

6. Appareil selon l'une quelconque des revendications précédentes dans lequel le support d'enregistrement de disque (2) est un support d'enregistrement magnéto-optique (2).

7. Appareil selon la revendication 1 dans lequel les informations de temps absolu correspondant à la position d'enregistrement sur le support d'enregistrement de disque (2) en même temps que les données d'enregistrement sont enregistrées sur le support d'enregistrement de disque (2).

8. Appareil selon la revendication 1 comprenant un appareil de reproduction de disque pour reproduire des données successivement enregistrées sur des pistes sur un support d'enregistrement de disque (2), l'appareil de reproduction comprenant :
un moyen de reproduction (3, 4) pour reproduire successivement les données enregistrées à un second débit de transfert qui est supérieur à un premier débit de transfert nécessaire pour fournir les données reproduites ;
un moyen de mémoire (22) dans lequel les données reproduites extraites par le moyen de reproduction (3, 4) sont séquentiellement écrites au second débit de transfert et à partir duquel les données ainsi écrites sont successivement extraites comme des données de sortie reproduites au premier débit de transfert ; et
un moyen de commande (7) pour commander l'écriture des données reproduites dans le moyen de mémoire (22) pour qu'une seconde quantité de données reproduites soit écrite dans le moyen de mémoire (22) et une quantité de données reproduites, non inférieure à une première quantité, soit toujours stockée dans le moyen de mémoire (22) lorsque la quantité de données reproduites stockées dans le moyen de mémoire (22) devient non supérieure à une première quantité ;
le moyen de commande (7) forçant aussi le moyen de reproduction (3, 4) à commander la position de reproduction sur le support d'enregistrement de disque (2) pour que les données reproduites séquentiellement écrites dans le moyen de mémoire (22) d'une manière interrompue soit successivement lues à partir des pistes d'enregistrement sur le support d'enregistrement de disque (2).
